# EUROPEAN PATENT APPLICATION

(11) **EP 4 325 118 A1**
(43) Date of publication of application: **21.02.2024**
(21) Application number: 23191654.5
(22) Date of filing: 16.08.2023
(51) Int. Cl.: F24B 1/18, F24C 3/00, F24C 7/00

(54) **SIMULATED FIREPLACE**

(30) Priority: 17.08.2022 NZ 22791427
(71) Applicant: Escea Limited, Dunedin 9018 (NZ)
(72) Inventor: DAVIS, Luke Graeme, 9018 DUNEDIN (NZ)
(74) Representative: Lewis Silkin LLP

(57) **Abstract**

A simulated fireplace appliance (100) which has an imaging system (200) and a modelled fuel bed (110) where the imaging system generates flame imagery which is overlaid the modelled fuel bed. The imaging system includes one or more image display apparatus (220) which projects flame image data, one or more an image creation screens (140) adapted to receive projected image data from the one or more image display apparatus. The one or more image creation screens are, each or in combination, a multifaceted surface. A translucent panel (130) is adapted to receive light from the one or more image creation screens and partially reflect said light from the appliance such that three-dimensional imagery can be observed from the appliance.

## Description

### Technical Field

The present invention generally relates to an appliance with an imaging system such as for a domestic simulated fireplace.

### Background Art

In the field of electric fires, a number of arrangements are known which attempt to simulate aspects of the appearance of open fires such as glowing coal or flickering flames. Electric fires are well known and are used to simulate fire effects without requiring an actual combustion of fuel. Such fires have been developed over many years and it is known to use mechanical and/or optical effects to generate a simulated fire effects. Such fires may be wall mounted or provided as a floor mounted unit which may be inserted into an opening (insert fires).

In one known arrangement, a translucent surface is illuminated from behind by video media to give the appearance of glowing coals and flames. EP1729067, use pre-recorded images of a fire and display those on electronic displays within the fire. As the images are of an actual fire burning the user of such a fire is presented with a very realistic effect of a fire burning.

However, one disadvantage of the prior art is that electronic displays are two dimensional and do not present any realistic depth to the flame. Another disadvantage is no possibility to align flame effects with fuel elements located in a modelled fuel bed: peaks and troughs of flame can be aligned with fuel bed, but the depth of flame cannot. Fuel bed ends up being placed in a linear and unrealistic arrangement for flame projection.

It is therefore an object of the invention to alleviate or improve upon the aforementioned disadvantages of the prior art, or at least provide the public with a useful choice. Other objects will be apparent to those skilled in the art.

### Summary of the Invention

According to an aspect the invention comprises an appliance comprising an imaging system and a modelled fuel bed having modelled fuel features (fuel bed components), the imaging system configured to generate flame imagery overlaid the modelled fuel bed, comprising: one or more image display apparatus adapted to project flame image data; one or more an image creation screens adapted to receive projected image data from the one or more image display apparatus, the one or more image creation screens comprising, each or in combination, a multifaceted surface; and a translucent panel adapted to receive light from the one or more image creation screens and partially reflect said light from the appliance.

In some embodiments, the multifaceted surface comprises segments for display of received image data delineated by one or more of: angular transitions, changes of a rate of curvature, two or more discrete screen segments arranged in a non-planar alignment.

In some embodiments, the modelled fuel bed comprises modelled fuel bed components optically aligned with at least one facet of the multifaceted surface.

In some embodiments, the flame imagery comprises three-dimensional flame imagery and/or two dimensional multiplanar flame imagery.

In some embodiments, the modelled fuel bed comprises a plurality of modelled fuel bed components, and at least a first component comprises a direction of extension which is non-planar with at least a second component, and whereby each of the first and second components are each optically aligned with at least one facet of the one or more an image creation screens.

In some embodiments, the translucent panel comprises two or more parts, the segments collectively comprising the translucent panel adapted to receive light from the image creation screen.

In some embodiments, the image data comprises an image frame having two or more regions, each region substantially aligned with a facet of the multifaceted surface.

In some embodiments, one or more regions of the image frame substantially corresponds to a facet of the multifaceted screen and to a component of the modelled fuel bed.

In some embodiments, the image frame comprises a video frame in a sequence of video frames, and one or more regions of the video frame substantially corresponds to a facet of the multifaceted screen and to a component of the modelled fuel bed.

In some embodiments, the image data comprises a flame media.

In some embodiments, the image data comprises video footage of real flames.

In some embodiments, the image data comprises one or more sources of imagery stitched together to form the image.

In some embodiments, the one or more image creation screen comprises one or more of a semi-transparent cloth, or semi-transparent plastic material.

In some embodiments, the imaging system further comprises: a processor; and one or more lighting components located in the modelled fuel bed.

In some embodiments, the processor is configured to: receive the image data for display; determine the location of lighting components in the modelled fuel bed and corresponding pixel information; and control the one or more lighting elements based on the pixel information.

In some embodiments, the pixel information comprises one or more of colour information and light intensity information.

In some embodiments, the optical system comprises two image display apparatus and one image creation screen, wherein each image display apparatus is configured to provide a combined output which substantially spans the image creation screen.

In some embodiments, the appliance comprises any one of a heating or cooling system operational to heat or cool the appliance and environment.

According to another aspect the invention comprises an imaging apparatus for an appliance comprising: one or more image display apparatus adapted to project image data; one or more an image creation screens adapted to receive light from any of the one or more image display apparatus; one or more translucent panels adapted to receive light from the image creation screen and reflect said light from the heating appliance; a modelled fuel bed comprising one or more fuel bed components, wherein the one or more fuel bed components are aligned to receive light from at least one facet of the multifaceted surface.

In some embodiments, the one or more image display apparatus and the one or more translucent panels are configured such that a varied gap is created there between such that a virtual image with depth is created over the fuel bed, and the one or more image display apparatus comprises one or more of: a curved image display; two or more image display segments; two or more image display segments in a nonlinear arrangement.

In some embodiments, the imaging apparatus further comprises an image creation screen adapted to receive projected image data, the image creation screen comprising a multifaceted surface delineated by one or more of: angular transitions, and/or changes of a rate of curvature.

According to one aspect the invention comprises an imaging system for a heating appliance having a modelled fuel bed, the imaging system configured to generate three-dimensional flame imagery above the modelled fuel bed, comprising: one or more image display apparatus adapted to project flame image data; one or more an image creation screens adapted to receive projected image data from the one or more image display apparatus, the one or more image creation screens comprising, each or in combination, a multifaceted surface; a translucent panel adapted to receive light from the one or more image creation screens and partially reflect said light from the heating appliance.

According to one aspect the invention comprises an imaging apparatus for a heating appliance comprising: an image display apparatus adapted to project image data; an image creation screen adapted to receive projected image data, the image creation screen comprising a multifaceted surface delineated by one or more of: angular transitions, and/or changes of a rate of curvature; a translucent panel adapted to receive light from the image creation screen and reflect said light from the heating appliance; and a modelled fuel bed comprising one or more fuel bed components.

In some embodiments, the one or more fuel bed components are aligned to receive light from at least one facet of the multifaceted surface.

In some embodiments, the image creation screen comprises two or more parts, the parts collectively comprising the multifaceted surface.

In some embodiments, the translucent panel comprises two or more parts, the segments collectively comprising the translucent panel adapted to receive light from the image creation screen.

In some embodiments, each facet of the multifaceted surface delineates a region substantially aligned with a component of the modelled fuel bed.

In some embodiments, the image data comprises an image frame having two or more regions, each region substantially aligned with a facet of the multifaceted surface.

In some embodiments, one or more regions of the image frame substantially corresponds to a facet of the multifaceted screen and to a component of the modelled fuel bed.

In some embodiments, the image frame comprises a video frame in a sequence of video frames, and one or more regions of the video frame substantially corresponds to a facet of the multifaceted screen and to a component of the modelled fuel bed.

In some embodiments, the image data comprises a flame imagery.

In some embodiments, the image data comprises video footage of real flames.

In some embodiments, the image data comprises one or more sources of imagery stitched together to form the image.

In some embodiments, the image creation screen comprises one or more of a semi-transparent cloth, or semi-transparent plastic material.

In some embodiments, each of the one or more sources is aligned with a region of the image frame, and the region of the image frame is aligned with a facet of the multifaceted projection screen, and a component of the modelled fuel bed.

In some embodiments, the imaging apparatus further comprises: a processor; and one or more lighting elements located in the modelled fuel bed.

In some embodiments, the processor is configured to: receive the image data for display; determine the location of the lighting element in the modelled fuel bed and corresponding pixel information; and control the one or more lighting elements based on the pixel information.

In some embodiments, pixel information comprises one or more of colour information and light intensity information.
In some embodiments, the invention relates to any one or more of the above statements in combination with any one or more of any of the other statements. Other aspects of the invention may become apparent from the following description which is given by way of example only and with reference to the accompanying drawings.

The entire disclosures of all applications, patents and publications, cited above and below, if any, are hereby incorporated by reference. This invention may also be said broadly to consist in the parts, elements and features referred to or indicated in the specification of the application, individually or collectively, and any or all combinations of any two or more of said parts, elements or features, and where specific integers are mentioned herein which have known equivalents in the art to which this invention relates, such known equivalents are deemed to be incorporated herein as if individually set forth.

To those skilled in the art to which the invention relates, many changes in construction and widely differing embodiments and applications of the invention will suggest themselves without departing from the scope of the invention as defined in the appended claims. The disclosures and the descriptions herein are purely illustrative and are not intended to be in any sense limiting.

The term "and/or" referred to in the specification and claim means "and" or "or", or both. The term "comprising" as used in this specification and claims means "consisting at least in part of". When interpreting statements in this specification and claims which include that term, the features, prefaced by that term in each statement all need to be present but other features can also be present. Related terms such as "comprise" and "comprised" are to be interpreted in the same manner.

As used herein, the singular forms "a," "an," and "the" are intended to include the plural forms as well, unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof It will be understood that when an element is referred to as being "connected" or "coupled" to another element, it can be directly connected or coupled to the other element or intervening elements may be present.

### Brief description of the drawings

The invention can be better understood with reference to the following drawings. The elements of the drawings are not necessarily to scale relative to each other, emphasis instead being placed upon clearly illustrating the principles of the invention. Furthermore, like reference numerals designate corresponding parts throughout the several views.
**Figure 1** shows a schematic of a simulated fireplace.
**Figure 2** shows some exemplary forms of a projection screen with two or more facets.
**Figure 3** shows a perspective view of an exemplary simulated fireplace.
**Figure 4** shows a side view of the simulated fireplace.
**Figure 5(A)** shows a diagram where a video camera is adapted to capture video.
**Figure 5(B)** shows a diagram of captured video being played in the simulated fireplace.
**Figure 6** shows a diagram where a video frame comprises a plurality of virtual regions.
**Figure 7** shows a schematic of components according to an embodiment including fuel bed lighting components, optional speakers, and optional ambient or infrared lighting components.
**Figure 8** illustrates an exemplary placement of ambient lighting features.
**Figure 9** illustrates an exemplary placement of speakers for sound transmission.

### Detailed Description of Preferred Embodiments

Exemplary methods, devices, assemblies and systems are described herein. It should be understood that the word "exemplary" is used herein to mean "serving as an example, instance, or illustration." Any embodiment or feature described herein as "exemplary" or "illustrative" is not necessarily to be construed as preferred or advantageous over other embodiments or features. More generally, the embodiments described herein are not meant to be limiting. It will be readily understood that certain aspects of the disclosed systems and methods can be arranged and combined in a wide variety of different configurations, all of which are contemplated herein. The present invention generally relates to imaging apparatus such as for use in heating appliances such as a domestic simulated fireplace. In a simulated fireplace there is an optical system configured to display simulated flame effects. It is also desirable for those flame effects to be located above a modelled fuel bed so as to provide the overall impression of flames which are rising from burning fuel.

The optical system typically comprises a media player configured to display a video of flames. The video will typically be a short clip of flames which loops over and over. The video is visible and located near the modelled fuel bed such that the appearance of a burning fuel bed is created. To enhance the placement of the video playback, a technique known as 'Pepper's Ghost' is implemented, where a translucent screen is placed at an angle behind or in front of a fuel bed. The screen is typically placed at an angle which reflects incident light from the media player toward a viewer. Typically this angle is 45 degrees to achieve the most realistic image to the viewer and for alignment of componentry. In some embodiments, a projection screen is placed between the media player and the screen so that viewers see a reflected virtual image that appears to have a depth. The media player may be a screen such as an LED or LCD screen, or may be a projection apparatus such as a media projector.

A real fuel bed of a domestic fireplace typically includes combustible materials such as logs, coals, and embers. It follows that a modelled fuel bed also contain modelled fuel bed elements of a similar nature. The placement and layout of fuel bed elements is typically random and somewhat scattered about the area of the fuel bed. A real fireplace will have flames which rise from the burning edges of those fuel bed elements and which generally follow the alignment and placement of the random or scattered fuel elements. In creating a simulated fireplace with simulated flames which appear realistic, there is one shortcoming of the prior art which is that the depth of flames is fixed.

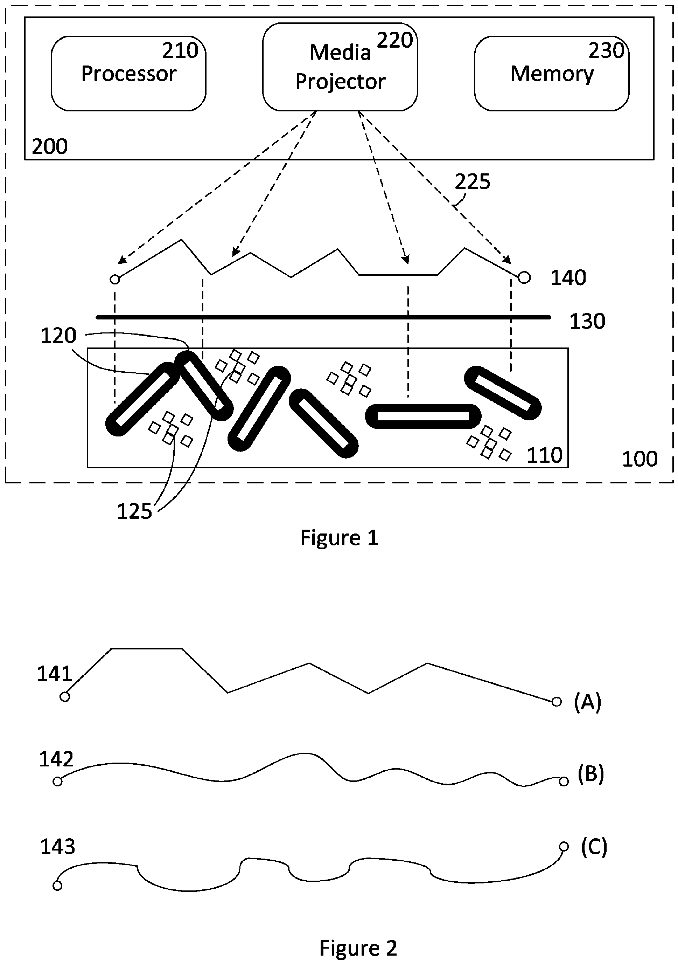

Accordingly, **Figure 1** shows a schematic of a simulated fireplace 100 with particular components adapted to address these shortcomings. The simulated fireplace 100 includes components 200 including electronic and optical components. The electronic and optical components together provide for a simulated flame effect over a modelled fuel bed 110.

The electronic components 200 include a processor 210, media player 220, and memory component 230. The processor is configured to operate the media projector component 220, and optionally, other electronic devices which may be incorporated into the fireplace, such as, for example, lighting and sound generation devices. The memory component 230 is configured to store video data for playback and notably, flame video media. The memory component 230 may optionally store other data, such as, for example, audio media.

The media player may be one or more light emitting devices capable of video playback. However, in preferred forms, the media player is preferably a media projection apparatus and will be herein referred to as the media projector 220. The media projector 220 comprises an optical system configured for projecting light onto a distal surface as indicated by beams 225. In one embodiment, the media projector comprises a display device for generating visible media, and optical components for transmitting light from the display. In some embodiments, the display device is sized according to the desired dimensions of the simulated flames for display. In some embodiments, the display is smaller than the desired simulated flames area, and the optical components comprise one or more lenses for magnifying the display. Many forms of optical components adapted for projecting video media are possible and suitable for use in various embodiments.

The optical components of the system include an image creation screen or projection screen 140 and a translucent surface 130. The image creation screen is a semi-transparent screen which allows light to pass through to the translucent surface. The translucent surface 130 may be implemented by plate glass having a partially mirrored surface such that some incident light is reflected, and some incident light is transmitted. In some embodiments, the translucent surface is a dichroic mirror formed from a coating applied to glass. The dichroic mirror is about 50% transparent, but other ratios are also useful, for example with a 30 to 70% transparency. The glass 130 received light from the media projector 220 and reflects that light toward a viewer in front of the fireplace. To the viewer, the origin of the light received and reflected by the glass appears to originate at or behind the glass.

To create a three dimensional and realistic appearance of flames which correspond with fuel bed features (or components), preferred embodiments comprise a varied gap between the origin of the imagery (the media projector is display screen) and the translucent glass 130. Further, preferred embodiments comprise a substantially non-parallel and substantially varied gap between the media origin and the glass. This can be created by a number of structural considerations, including particular arrangements of the media projector (such as multiple screens, nonlinear or curved screens), the projector screen (one or more screen segments arranged in a nonlinear manner), and the glass (one or more glass segments arranged in a nonlinear manner), and combinations thereof. Some of these arrangements are discussed in further detail below.

In one exemplary embodiment, the simulated fireplace comprises a display and two or more glass 130 panels arranged in a manner such that a varied gap is created. In this way, the varied gap provides a depth to the images seen by a viewer. In some exemplary embodiments, the translucent glass 130 comprises two or more sections of translucent glass which collectively form the translucent surface for receiving the projected media.

In another exemplary embodiment, the simulated fireplace comprises a display having a media projection device with a nonlinear display surface. For example, a flexible or curved screen is used, or multiple screens where each screen is arranged at two different orientation.

In another exemplary embodiment, the simulated fireplace comprises a display having a nonlinear, curved or segmented display surface, and the glass comprises a nonlinear, curved or segmented display surface, whereby areas of the display and glass together create a varied gap. In some embodiments, the projection screen is a continuous surface comprising segments which are delineated by different planes of extension, the projection screen is otherwise referred to in this specification as the image creation screen as it is the surface which receives light from the media projector, and ultimately passes that light to the glass 130 due to its semitransparency. The projection screen functions as a device which creates a variable distance between the surface of the screen and the glass 130 for the screen area illuminated by the media projector. The variable gap causes a variable depth of imagery seen by a viewer. The variable gap advantageously allows for a varied depth of flame imagery which is seen by a viewer. This in turn adds to the realism of the simulated flame effect when compared to a flat projection surface which does not offer any varied gap. In some embodiments the projection screen comprises multiple screens, each, or collectively having a varied gap. These multi tablet style arrangements would allow for the multi depth projection directly onto the translucent surface.

In some embodiments, the projection screen is a display device, such as an LCD display or similar and the projection screen comprises the screen of the display device. In some embodiments, the projection screen comprises two or more display devices arranged so as to collectively present a varied gap with respect to the position of the glass 130.

In some exemplary embodiments, the projection screen 140 comprises a multifaceted surface. For example, the screen 140 has facets of the surface which are aligned with features of the fuel bed 110, such as log features 120, and optionally embers or coals 125. As mentioned above, the fuel bed features 120, 125 are randomly scattered about the fuel bed. Therefore, the realism of the simulated flames is improved when those flames are aligned with the location and length of particular fuel bed features.

It should be noted that in some embodiments, the projection screen 140 comprises a multifaceted surface, the facets each contributing toward some difference in the depth of the screen when combined with one or more other facets. The term multifaceted is intended to mean a surface with many sides, each side being delineated from another in some way, such as a bend, corner, edge, or separation. Equally, the projection screen for image creation may be multisided, multisegmented, multipart, or other many-sided surface also delineated.

In some embodiments, the projection screen 140 is constructed from cloth spanning a wire frame where the cloth is semi-transparent to incident light, and the wire frame forms the shape and angles of the screen. However, in some embodiments, the projection screen is constructed from semi-transparent plastic. For example, an acrylic plastic. In some embodiments, the projection screen is constructed from acrylic plastic moulded to a desired shape and form.

**Figure 2** shows some exemplary forms of a surface with two or more facets. Figure 2(A) shows an exemplary screen surface 141 which comprises facets of linear segments, each delineated by an angular transition to the next segment. Figure 2(B) shows an exemplary screen surface 142 which comprises facets of curved segments, each delineated by changes in the rate of curvature. Figure 2(C) shows an exemplary screen surface 143 which comprises facets each delineated by angular transactions or a rate of change of curvature. Combinations of the facets observable from Figures 2(A)-(C) are possible and it should be appreciated that other forms of the screen are possible. Further, there may be two or more projection screens 140 implemented in a simulated fireplace, where at least one screen comprises regions delineated by different planes of extension.

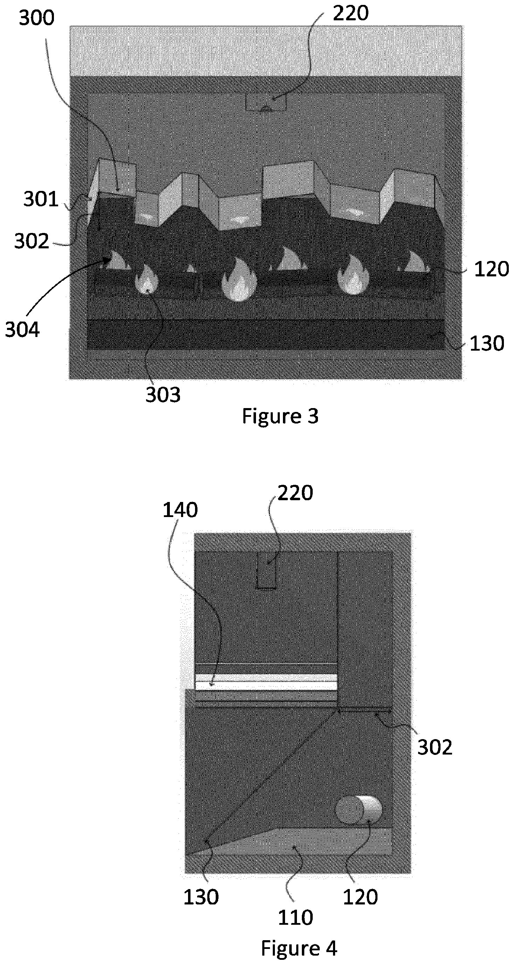

**Figure 3** shows a perspective view of the simulated fireplace 100, and in particular shows the linking of screen surface facets with fuel bed features. The fuel bed 110 shows a number of logs as fuel element features 120. The projection screen shows a multifaceted surface where a first facet 301 and second facet 300 are aligned with the front and back of a log feature. The first and second facets include surfaces with a spacing 302 which aligns with the width of the log feature. In this way, a first portion of the flame video which is projected onto the first facet 301 is displayed on a first log side 304, and a second portion of the flame video projected onto the second facet 300 is displayed on the second log side 303.

**Figure 4** shows a side view of the simulated fireplace 100, and in particular shows the alignment of the screen 130 over the fuel bed 110. Components of the fuel bed are able to be placed within a depth 302 which substantially corresponds to a depth of the projection screen 140. In this way, facets of the projection screen are able to be aligned with the variable depth of fuel bed features.

In some embodiments, the memory component of the electronics system is configured to store video media whereby that media comprises video frames with areas of each video frame substantially dedicated to the segment of the projection screen. In this way, the video media, screen and features of the fuel bed harmonise to provide a simulated flame which appears to be originating at particular regions of the fuel bed features.

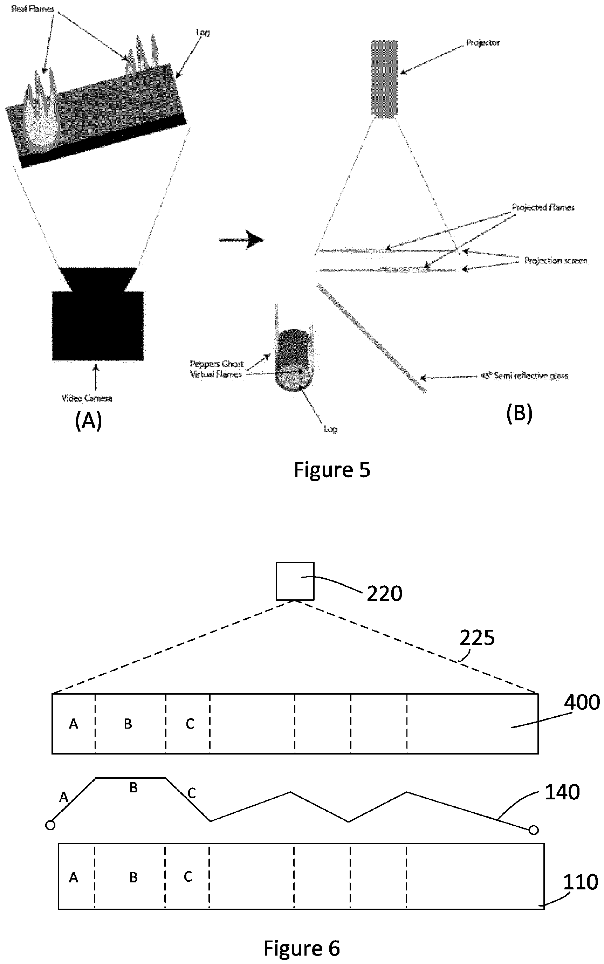

In some embodiments, the video media for projection is captured from real flames burning on a real fuel bed. In some embodiments, features of the fuel bed 110 are modelled based on fuel bed features captured in the video media. For example, Figure 5(A) shows a diagram where a video camera is adapted to capture video of flames from a burning log. Figure 5(B) shows that captured video being played in the virtual fireplace 100 where the projection surface 140 comprises facets which are aligned with flame locations captured by the video data. In this way, virtual flames are recreated in the correct location.

In some embodiments, the video media comprises image frames, each comprising segments of other image frames. For example, a region of a video frame may capture imagery of one flame from a first media source, and another region of the video frame may capture imagery of another frame from another media source. In this way, the video media comprises a stitching of multiple sources together. In some embodiments, the video media comprises weather features such as clouds, mist, and rain for projection to the translucent screen 130 and therefore display over the fuel bed. Other imagery may be used as desired.

Accordingly, in one embodiment there is a process for capturing media for playback in a simulated fireplace, including the steps of:
1. Capturing video data of flames burning from a fuel component
2. Recording the dimensions of the fuel component
3. Substantially replicating the dimensions of the fuel component on a projection screen; and
4. Projecting the captured video data onto the projection screen.

The video media comprises video frames, which essentially represent a sequence of pictures of the frames for display. Each picture of each video frame comprises a map of pixel information. Embodiments, this map comprises two or more virtual regions whereby a flame associated with one or more fuel bed features may be represented by the video data in each region. **Figure 6** shows a diagram where a video frame 400 comprises a plurality of virtual regions, shown as regions A, B, C and others. In some embodiments, virtual regions of each video frame 400 are substantially aligned with facets of the projection screen 140. In turn, the virtual regions of the video and facets of the projection screen are substantially aligned with one or more particular features of the fuel bed 110. For example, in Figure 6, video frame regions A, B and C are each aligned with screen regions A, B and C, and also with fuel bed features A, B and C respectively. It should be noted that the pictures of video frames are often desired to be substantially continuous, and therefore such regions are not intended to be strictly delineated. In some embodiments, there are multiple projector devices arranged for the display of video media on different regions. For example, a first projector arranged to project video media to screen regions A and B, and a second projector arranged for one or more other regions.

In some embodiments, the fuel bed comprises one or more lighting features. In some embodiments lighting feature of the fuel bed comprises one or more lights configured to mimic a glowing ember. For example, the lights might be one or more LED components of one or more colours appropriate for representing fire or ember features. In some embodiments, the processor 210 is configured to control operation of the lighting features, including control of one or more of the intensity and colour over time.

In some embodiments, the processor is configured to extract pixel information from the video data output from the media projector, where pixel information includes colour and map coordinate information. In some embodiments, the processor is configured to control one or more of the intensity and colour of lighting features in the fuel bed based on the extracted pixel information. In this way, the flicking of embers modelled in the fuel bed may be replicated by appropriate control of the lighting features. The realism of the simulated fireplace is thereby further improved.

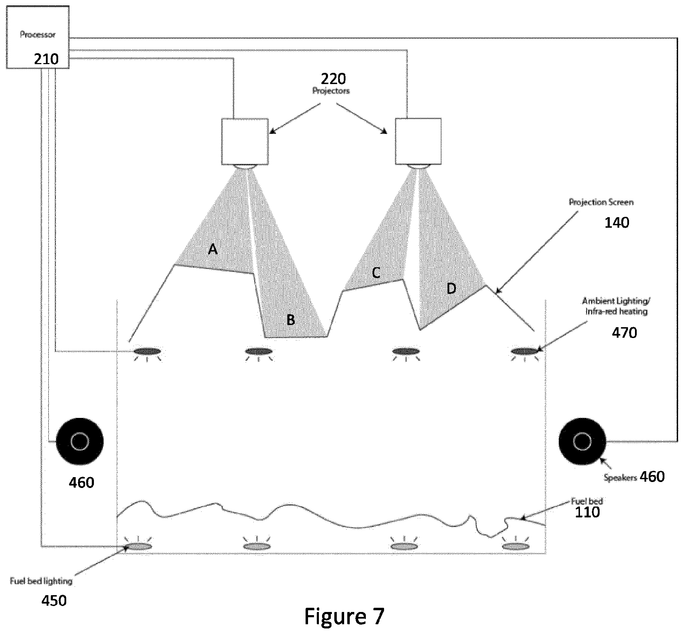

**Figure 7** shows a schematic of components according to an embodiment including fuel bed lighting components 450, optional speakers 460, and optional ambient or infrared lighting components 470. In some embodiments, the processor is configured to operate speaker components 460 to output sounds of an active fireplace. In some embodiments, the processor is configured to operate ambient lighting or infrared heating devices 470. In some embodiments, the processor is configured to operate at least the ambient lighting components 470 based on extracted video information.

Also shown in Figure 7 are two media projection apparatus 220 whereby a first apparatus is configured to project video to two facets of the projection screen (A and B) and a second projection apparatus is configured to project video to another two facets of the projection screen (C and D).

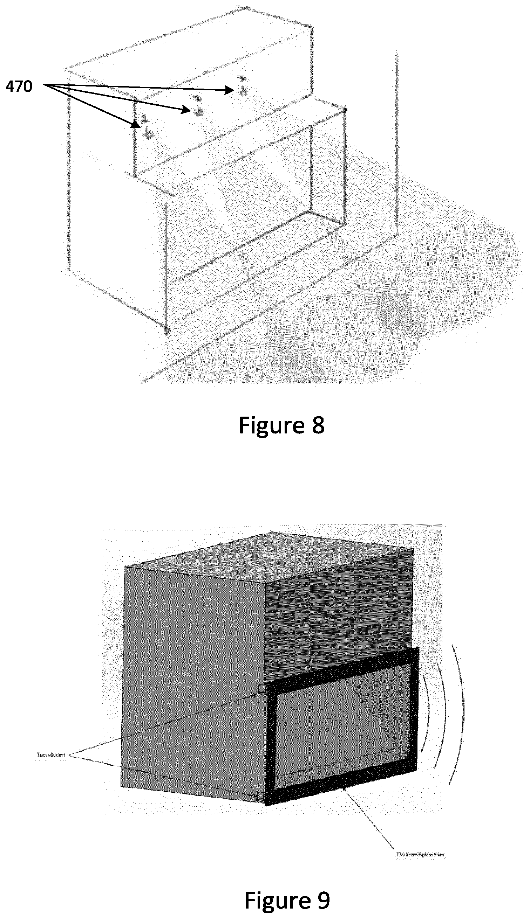

**Figure 8** illustrates an exemplary placement of ambient lighting features 470. Light is projected outwards from the fireplace into the room to create the flickering effect given off by a real flame. This light may be generated by LEDs or by glowing infrared bulbs, thus also giving the feeling of heat when a user stands in the path of the light. In some embodiments, the processor is configured to control the flicking effect of the lighting features.

**Figure 9** illustrates an exemplary placement of speakers for sound transmission. In some embodiments, the sound transmission is produced by one or more contact speaker components. In some embodiments, one or more contact speaker components are arranged on the front of the simulated fireplace, such as on a front surface. In some embodiments, ambient fire sounds are projected into the room via vibration transducers hidden behind the front fireplace glass. This effectively turns the firebox into a large speaker, creating a realistic feeling of sound being emitted from the inside of the fireplace.

LED under-lighting is able to be shone through the semi translucent material of the model fuel bed creating a glowing effect as if the embers are burning. Logs for flame projection may be cast into the resin, or made as a separate piece for placement on top of the cast resin.

### Exemplary embodiments

Each exemplary embodiment is intended to be arranged in conjunction with a modelled fuel bed of a simulated fireplace. The modelled fuel bed comprises modelled fuel components arranged somewhat randomly or naturally as one might expect to observe in a real fireplace. The fuel bed components are not typically arranged in a plane or alignment. For example, log components would be aligned in different directions; and coal components would be scattered around the arrangement of log components. It is therefore desirable that the exemplary embodiments comprise an imaging system which provides a simulated in the locations and planes of extension of the fuel bed components. Accordingly, the following exemplary embodiments represent possibilities for achieving such arrangements.

In one exemplary embodiment, there is a simulated fireplace of a heating appliance comprising two or more image display apparatus adapted to project image data. Each image display apparatus is arranged to project image data to an image creation screen. Each image creation screen comprises at least one surface with an alignment which differs from the other. The alignment is characterised to correspond with components of a modelled fuel bed of the heating appliance. The image creation screen is defined as a translucent surface which permits light to be transmitted through. Light transmitted by the image creation screen is received by one or more translucent panels reflect said light from the heating appliance.

In a further exemplary embodiment, there is a simulated fireplace of a heating appliance comprising an image display apparatus adapted to project image data. The image display apparatus is arranged to project image data to two or more image creation screens. The image creation screen is defined as a translucent surface which permits light to be transmitted through. Light transmitted by each of the image creation screens is received by one or more translucent panels reflect said light from the heating appliance.

In a further exemplary embodiment, there is a simulated fireplace of a heating appliance comprising two or more image display apparatus adapted to project image data. Each image display apparatus is arranged to project image data to two or more image creation screens. Each image creation screen comprises at least one surface with an alignment which differs from the other. The image creation screen is defined as a translucent surface which permits light to be transmitted through. Light transmitted by each of the image creation screens is received by one or more translucent panels reflect said light from the heating appliance.

In each exemplary embodiment, the image creation screen, or screens, comprise a multifaceted surface delineated by one or more of angular transitions, changes of a rate of curvature, and/or discrete non-planar and/or non-parallel segments as may be required to receive light projected from the image display apparatus.

From the foregoing, it will be appreciated that, although specific embodiments have been described herein for purposes of illustration, various modifications may be made without deviating from the spirit and scope of the invention. Accordingly, the invention is not limited except as by the appended claims and the elements recited therein. In addition, while certain aspects of the invention are presented below in certain claim forms, the inventors contemplate the various aspects of the invention in any available claim form.

## Claims

1. A simulated fireplace appliance (100) comprising an imaging system (200) and a modelled fuel bed (110) having modelled fuel bed features, the imaging system configured to generate flame imagery overlaid the modelled fuel bed, comprising:
one or more image display apparatus (220) adapted to project flame image data;
one or more an image creation screens (140) adapted to receive projected image data from the one or more image display apparatus (220), the one or more image creation screens (140) comprising, each or in combination, a multifaceted surface; and
a translucent panel (130) adapted to receive light from the one or more image creation screens and partially reflect said light from the appliance.

2. The appliance as claimed in claim 1, wherein the multifaceted surface of the image creation screen (140) comprises segments for display of received image data delineated by one or more of:
angular transitions,
changes of a rate of curvature,
two or more discrete screen segments arranged in a non-planar and/or non-parallel alignment.

3. The appliance as claimed in claim 2, wherein the modelled fuel bed (110) comprises one or more modelled fuel bed features optically aligned with at least one facet of the multifaceted surface.

4. The appliance as claimed in claim 2 or claim 3, wherein the modelled fuel bed (110) comprises a plurality of modelled fuel bed features, and
at least a first modelled fuel bed feature comprises a direction of extension which is non-planar with at least a second modelled fuel bed feature, and
whereby each of the first and second modelled fuel bed features are each optically aligned with at least one facet of the one or more an image creation screens.

5. The appliance as claimed in claims 1 to 4, wherein the translucent panel (130) comprises two or more parts, the segments collectively comprising the translucent panel adapted to receive light from the image creation screen.

6. The appliance as claimed in claims 1 to 5, wherein the image data comprises an image frame defining two or more regions, each region substantially aligned with a facet of the multifaceted surface.

7. The appliance as claimed in claim 6, wherein one or more regions of the image frame substantially corresponds to a facet of the multifaceted screen and to a feature of the modelled fuel bed.

8. The appliance as claimed in claims 1 to 7, wherein the image frame comprises a video frame in a sequence of video frames, and one or more regions of the video frame substantially corresponds to a facet of the multifaceted screen and to a component of the modelled fuel bed.

9. The appliance as claimed in claims 1 to 8, wherein the image data comprises a flame media.

10. The appliance as claimed in claims 1 to 9, wherein the image data comprises video footage of real flames.

11. The appliance as claimed in claims 1 to 10, wherein the image data comprises one or more sources of imagery stitched together to form the image.

12. The appliance as claimed in any one of claims 1 to 11, wherein the one or more image creation screens (140) comprise one or more of a semi-transparent surface, a semi-transparent cloth, or semi-transparent plastic material.

13. The appliance as claimed in any one of claims 1 to 12, wherein the imaging system further comprises:
a processor (210); and
one or more lighting components (125) located in the modelled fuel bed (110).

14. The appliance as claimed in claim 13, wherein the processor (210) is configured to:
receive the image data for display;
determine the location of lighting components in the modelled fuel bed (110) and corresponding pixel information; and
control the one or more lighting elements based on the pixel information, and
wherein the pixel information comprises one or more of colour information and light intensity information.

15. The appliance of any of claims 1 to 14, wherein the appliance comprises any one of a heating or cooling system operational to heat or cool the appliance and environment.
